# EUROPEAN PATENT SPECIFICATION

(11) **EP 3 270 054 B1**
(45) Date of publication and mention of the grant of the patent: **06.05.2020**
(21) Application number: 15877548.6
(22) Date of filing: 12.06.2015
(51) Int. Cl.: F21V 21/108, H02J 50/10, H05B 45/00, H05B 33/08

(54) **SELF-LUMINOUS SUSPENSION LAMP**
SELBSTLEUCHTENDE HÄNGELAMPE
LAMPE À SUSPENSION AUTO-LUMINEUSE

(30) Priority: 12.01.2015 CN 201510015914
(43) Date of publication of application: 17.01.2018
(73) Proprietor: Yutou Technology (Hangzhou) Co., Ltd., Hangzhou City, Zhejiang 311199 (CN)
(72) Inventor: ZHANG, Jiong, Hangzhou City Zhejiang 311199 (CN)
(74) Representative: Latzel, Klaus
(86) International application number: PCT/CN2015/081407
(87) International publication number: WO 2016/112632

(56) References cited:
- WO-A1-2010/150207
- CN-U- 202 206 595
- CN-U- 202 206 595
- CN-U- 202 972 751
- CN-U- 202 992 722
- CN-Y- 2 761 963
- CN-Y- 2 761 963
- DE-A1- 4 139 201
- US-A1- 2014 333 252

## Description

### BACKGROUND OF THE INVENTION

### 1. Field of the Invention

The present disclosure relates to a magnetic suspension technology field, more specifically, to a self-luminous suspension lamp.

### 2. Description of the Related Art

With the development of the electronic technology, the magnetic suspension technology becomes more mature and it has ornamental value and technical value. Therefore, the magnetic suspension technology has applied to various technical fields, such as toy, gift, advertisement and industry etc.

The magnetic suspension device generally includes magnetic base and suspension body. A magnetic force generated by the repelling between an electromagnet in the magnetic base and a magnet in the suspension body keeps balance to the gravity of the suspension body, so that the suspension body remains in suspension. For example, although the lamp from marketplace is widely used due to its excellent luminous effect, if the magnetic suspension technology is applied to the lamp, the ornamental value and motion value is improved greatly.

The suspension lamp in prior art is an illumination device without electric wires. It comprises upper part and lower part: the upper part is a lampshade in which an electromagnet is configured, the lampshade is suspended on a suitable position directly; the lower part is a suspension control system in which a coil is configured. After powering on the suspension lamp, the magnetic force generated by the repelling between the electromagnet and coil offsets the gravity of the lampshade so that the upper lampshade is suspended. Then, a luminescent lamp (a lamp which illuminates) below the lampshade illuminates on the lampshade directly to make the lampshade luminous.

At present, the suspension lamp illuminates by the lower luminescent lamp illuminating the upper lampshade, an opening is configured on the lower side of the lampshade to allow the lower luminescent lamp illuminates in the lampshade. If the lampshade is a closed shape, such as round or ellipse, the light sent by the luminescent lamp can not illuminates on the lampshade evenly. Therefore, the shape and structure of the lampshade is limited, the aesthetic value of the people is reduced.

WO 2010/150207 A1 refers to a light-emitting device comprising a light-emitting unit that may be levitated above a base unit. CN202206595U refers to Magnetic suspension lighting device.

Hence, it is difficult for the skilled in the art to improve the aesthetic value of the suspension lamp.

### SUMMARY OF THE INVENTION

According to above-mentioned problem, the invention provides a self-luminous suspension lamp to address the shortcoming which the ornamental value is low due to the limitation of the shape and structure of the lampshade in the prior art.

The technical solution of the present invention is:
A self-luminous suspension lamp, comprising:
a floater, in which a light-emitting device and a magnet is configured;
a base configured below the floater, two electromagnetic coils and a suspension control system being configured in the base, and a Hall sensor being configured between the two electromagnetic coils and being configured in the base, and the Hall sensor being connected to the suspension control system;
wherein, a magnetic force generated by one of the two electromagnetic coils is balanced with a gravity of the magnet; and
the suspension control system is connected to one of the electromagnetic coils, and is configured to control the magnetic force of the electromagnetic coil to suspend the floater on the base.
wherein, when the floater changes its position, the Hall sensor detects a feedback signal which reflects a variation of a magnetic field intensity of the magnet configures in the floater, and send the feedback signal to the suspension control system, and the suspension control system varies the magnetic force generated by the electromagnetic coil in real time, so that a rebelling force of the floater offsets a gravity of the floater, and the floater is suspended in an optimal suspension position;
wherein a wireless charging system is configured in the base, and the wireless charging system is connected to the electromagnetic coil other than the electromagnetic coil connected to the suspension control system;
wherein the wireless charging system comprises a wireless power controller, a first power converting module connected to the wireless power controller, a full bridge converting module connected to the wireless power controller and a variable output module connected to the wireless power controller;
wherein, the full bridge converting module is connected to the variable output module and the electromagnetic coil;
a power supply, the power supply is connected to the wireless power controller through the first power converting module; the power supply outputs a voltage, the first power converting module decreases the voltage and transmits decreased voltage to the wireless power controller, the wireless power controller adjusts output power to the variable output module, after the output power is transformed via the variable output module and then transformed power is provided to the full bridge converting module;
a charge coil is configured in the floater, the charge coil is connected to the light-emitting device and is configured to charge the light-emitting device to drive the LED light to be self-luminous continually.

Preferably, the self-luminous suspension lamp has a Hall sensor configured in the base; and
the Hall sensor is connected to the suspension control system.

Preferably, the self-luminous suspension lamp has a power amplifier configured in the base; and
the suspension control system is connected to the electromagnetic coil through the power amplifier, so as to control the magnetic force of the electromagnetic coil by controlling output power of the power amplifier.

Preferably, the self-luminous suspension lamp, wherein a charge coil is configured in the floater: and
the charge coil is connected to the light-emitting device and is configured to charge the light-emitting device.

Preferably, the self-luminous suspension lamp, wherein a wireless charging system is configured in the base;
the wireless charging system comprises a wireless power controller, a first power converting module connected to the wireless power controller, a full bridge converting module connected to the wireless power controller and a variable output module connected to the wireless power controller:
wherein, the full bridge converting module is connected to the variable output module and the electromagnetic coil.

Preferably, the self-luminous suspension lamp further comprises a power supply; and
the power supply is connected to the wireless power controller through the first power converting module.

Preferably, the self-luminous suspension lamp, wherein a second power converting module is configured in the base; and
the power supply is connected to the suspension control system through the second power converting module.

Preferably, the self-luminous suspension lamp, wherein an output voltage of the power supply is 12V.

Preferably, the self-luminous suspension lamp, wherein the light-emitting device is a light-emitting diode (LED) lamp, the LED lamp is driven to be self-luminous continually.

The above-mentioned technical solution has the following benefits:
The present invention discloses a self-luminous suspension lamp comprising a wireless charging device, a floater in which a light-emitting device and a magnet being configured, an electromagnetic coil configured below the floater, a suspension control system connected to the electromagnetic coil. In the present invention, the magnet is configured in the floater, the magnetic force generated by the electromagnetic coil after powering on is balanced with the gravity of the whole floater (including light-emitting device and magnet) so that the floater is suspended. A Hall sensor is configured below the floater, the displacement of the floater will cause the feedback of the Hall sensor. Further, the suspension controller varies the output power according to the result of the feedback of the Hall sensor, to keep the floater in a stable status in real time. Hence, the invention provides a beauty and an effect of science for the domestic illumination, and provides an enjoyment for the life. Meanwhile, the structure of the invention is simple, and is easy to manufacture, therefore it has wide application prospect.

### BRIEF DESCRIPTIONS OF THE DRAWINGS

Referring to the accompanying drawings, the description made by the unlimited embodiments, the disclosure and the feature, outline and advantage thereof will be more obvious. The same signs in all drawings indicate the same portions and they are not drawn in proportion intentionally. It illustrates the meaning of the invention.

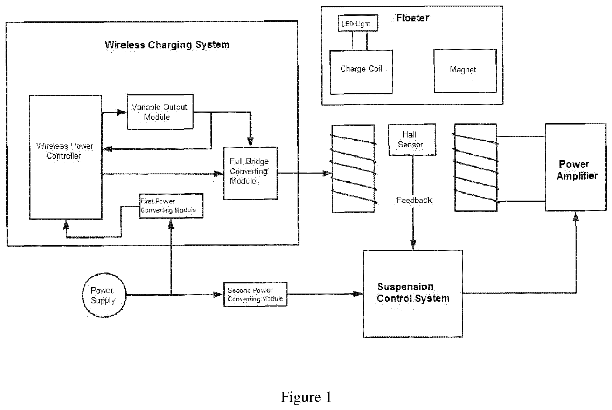

Figure 1 shows the structure schematic view of the self-luminous suspension lamp according to the present invention.

### DETAILED DESCRIPTIONS

The core concept of the invention is as follows: set a magnet and a light-emitting device in the floater, balance the magnetic force generated by the electromagnetic coil after powering on with the gravity of the whole floater (including light-emitting device and magnet) so that the floater is suspended. Set a Hall sensor below the floater, the displacement of the floater will cause the feedback of the Hall sensor. Further, the suspension controller varies the output power according to the result of the feedback of the Hall sensor, to keep the floater in a stable status in real time.

The present disclosure will now be described more fully hereinafter with reference to the accompanying drawings, in which exemplary embodiments of the invention are shown. This invention may, however, be embodied in many different forms and should not be construed as limited to the embodiments set forth herein.

To address the shortcoming which the ornamental value is low due to the limitation of the shape and structure of the lampshade in the prior art, the invention provides a self-luminous suspension lamp.

Referring to Figure 1, the self-luminous suspension lamp comprises a floater and a base configured below the floater, an electromagnetic coil configured in the base and a suspension control system connected to the electromagnetic coil.

According to one embodiment of the present invention, a light-emitting device and a magnet are configured in the floater, the magnet generates an opposite magnetic field to the electromagnetic coil during the operation of the suspension lamp, the magnet suffers a repelling force in an upward direction, the repelling force generated by the electromagnetic coil is balanced with the gravity of the whole floater (including light-emitting device and magnet) so that the floater is suspended. Preferably, the light-emitting device is a LED light.

Preferably, in an embodiment of the present invention, there are two electromagnetic coils, a Hall sensor is configured between two electromagnetic coils and is configured in the base. The Hall sensor is connected to the suspension control system. When the floater changes its position, the Hall sensor can detect the feedback signal which reflects the variation of the magnetic field intensity of the electromagnet configured in the floater, and sends the feedback signal to the suspension control system. The suspension control system varies the magnetic force generated by the magnetic field of the electromagnetic coil in real time, so that the rebelling force of the floater offsets the gravity of the floater, and the floater is suspended in an optimal suspension position. The suspension control system is also connected to a power amplifier (the suspension control system varies the magnetic field intensity of the electromagnetic coil by adjusting output power of the power amplifier), the power amplifier is connected to the electromagnetic coil so as to vary the magnetic field generated by the electromagnetic coil in real time.

When the LED light emits light beam on the floater, it is possible to make the emitting beam of the LED light distribute on the floater evenly, so as to increase the scope of design for the structure and shape of the suspension lamp. A charge coil, configured in the floater, provides the power to the LED. The magnetic field generated by the charge coil in the floater is varied by varying the magnetic field of the electromagnetic coil, so that the charge coil generates the induced electromotive force to drive the LED light to be self-luminous continually.

In the self-luminous suspension lamp, a wireless charging system is configured in the base. The wireless charging system is connected to one of the electromagnetic coils, the suspension control system is connected to the other. The wireless charging system comprises a wireless power controller, a first power converting module connected to the wireless power controller, a full bridge converting module connected to the wireless power controller and a variable output module connected to the wireless power controller, wherein the full bridge converting module is connected to the variable output module. To provide the power to the electrical energy of the electromagnetic coil or the variation of the electric field continually, a further power supply (such as the voltage is 12V or other output voltage values) is required. The power supply is connected to the first power converting module, and is connected to the suspension control system through the second power converting module. Preferably, the second power converting module is configured in the base. On the one hand, when the power supply outputs the voltage, the first power converting module decreases the voltage (such as 3V) and transmits the decreased voltage to the wireless power controller. The wireless power controller adjusts the output power directly or by the variable output module, the power is then provided to the full bridge converting module. The full bridge converting module is connected to the electromagnetic coil. The full bridge converting module receives the corresponding power, and outputs the alternating voltage to form the alternating magnetic field in the electromagnetic coil. Because the magnetic field in the electromagnetic coil is varied, the charge coil in the corresponding floater generates the induced electromotive force to drive the LED light to be self-luminous continually. On the other hand, when the power supply outputs the voltage, the first power converting module decreases the voltage (such as 3V) and transmits the decreased voltage to the wireless power controller. The wireless power controller varies the magnetic field by the power amplifier so that the floater is suspended stably.

Meanwhile, the self-luminous suspension lamp provided by the invention illuminates the lamp by internal LED light, thus the whole lamp is shine. The lamp can be round or other shapes. The suspension lamp placed in home not only can be a illumination, but also is a beautiful ornament. For example, in an optional solution, a self-luminous suspension tellurion according to the invention acts as a floater suspended on a base. At present, the present suspension tellurion can not be luminous. It can be shine by reflecting the light emitted by external light, therefore only local map illuminated can be seen in the tellurion. By adopting the technology according to the invention, the whole tellurion is luminous and any point of it can be seen, this is not achieved by the prior art.

In conclusion, the present invention discloses a self-luminous suspension lamp comprising a wireless charging device, a floater in which a light-emitting device and a magnet being configured, an electromagnetic coil configured below the floater, a suspension control system connected to the electromagnetic coil. In the present invention, the magnet is configured in the floater, the magnetic force generated by the electromagnetic coil after powering on is balanced with the gravity of the whole floater so that the floater is suspended. A Hall sensor is configured below the floater, the displacement of the floater will cause the feedback of the Hall sensor. Further, the suspension controller varies the output power according to the result of the feedback of the Hall sensor, to keep the floater in a stable status in real time. Hence, the invention provides a beauty and an effect of science for the domestic illumination, and provides an enjoyment for the life. Meanwhile, the structure of the invention is simple, and is easy to manufacture, therefore it has wide application prospect.

The people skilled in art should be understood that the various embodiments can be implemented by combining the prior art and above-mentioned embodiments, and it is not described hereafter. The various embodiments do not impact the essential content of the invention, and it is not described hereafter.

While the present disclosure has been described in connection with certain exemplary embodiments, it is to be understood that the invention is not limited to the disclosed embodiments, the device and structure, which are not specifically described, should be understood as the common manner in the art to be implemented; any people skilled in the art can make possible changes and modifications, or equivalents thereof for the technical solution of the invention according to the above method without falling out of the scope of the invention defined in the claims.

## Claims

1. A self-luminous suspension lamp, comprising:
a floater, in which a light-emitting device and a magnet is configured;
a base configured below the floater, two electromagnetic coils and a suspension control system being configured in the base, and a Hall sensor being configured between the two electromagnetic coils and being configured in the base, and the Hall sensor being connected to the suspension control system;
wherein, a magnetic force generated by one of the two electromagnetic coils is balanced with a gravity of the magnet; and
the suspension control system is connected to one of the electromagnetic coils, and is configured to control the magnetic force of the electromagnetic coil to suspend the floater on the base;
wherein, when the floater changes its position, the Hall sensor detects a feedback signal which reflects a variation of a magnetic field intensity of the magnet configures in the floater, and send the feedback signal to the suspension control system, and the suspension control system varies the magnetic force generated by the electromagnetic coil in real time, so that a rebelling force of the floater offsets a gravity of the floater, and the floater is suspended in an optimal suspension position;
wherein a wireless charging system is configured in the base, and the wireless charging system is connected to the electromagnetic coil other than the electromagnetic coil connected to the suspension control system;
wherein the wireless charging system comprises a wireless power controller, a first power converting module connected to the wireless power controller, a full bridge converting module connected to the wireless power controller and a variable output module connected to the wireless power controller;
**characterised in that** the full bridge converting module is connected to the variable output module and the electromagnetic coil;
the self-luminous suspension lamp further comprising a power supply, the power supply is connected to the wireless power controller through the first power converting module; the power supply outputs a voltage, the first power converting module decreases the voltage and transmits decreased voltage to the wireless power controller, the wireless power controller adjusts output power to the variable output module, after the output power is transformed via the variable output module and then transformed power is provided to the full bridge converting module;
a charge coil configured in the floater, the charge coil is connected to the light-emitting device and is configured to charge the light-emitting device.

2. The self-luminous suspension lamp as claimed in Claim 1, wherein a power amplifier is configured in the base; and
the suspension control system is connected to the electromagnetic coil through the power amplifier, so as to control the magnetic force of the electromagnetic coil by adjusting output power of the power amplifier.

3. The self-luminous suspension lamp as claimed in Claim 1, wherein a second power converting module is configured in the base; and
the power supply is connected to the suspension control system through the second power converting module.

4. The self-luminous suspension lamp as claimed in Claim 1, wherein an output voltage of the power supply is 12V.

5. The self-luminous suspension lamp as claimed in Claim 1, wherein the light-emitting device is a light-emitting diode (LED) lamp,
the LED lamp is driven to be self-luminous continually.

## Patentansprüche

1. Eine selbstleuchtende Schwebelampe, umfassend:
Einen Schwebekörper, in welchem eine lichtemittierende Vorrichtung sowie ein Magnet angeordnet sind;
eine unterhalb des Schwebekörpers angeordnete Basis, zwei elektromagnetische Spulen und ein Schwebe-Kontrollsystem, die in der Basis angeordnet sind, und ein zwischen den zwei elektromagnetischen Spulen angeordneter Hallsensor, der in der Basis angeordnet ist, wobei der Hallsensor mit dem Schwebe-Kontrollsystem verbunden ist;
wobei eine durch eine der zwei elektromagnetischen Spulen erzeugte magnetische Kraft mit der Schwerkraft des Magneten im Gleichgewicht steht; und
das Schwebe-Kontrollsystem mit einer der elektromagnetischen Spulen verbunden ist und derart konfiguriert ist, dass es die magnetische Kraft der elektromagnetischen Spule steuert, um den Schwebekörper an bzw. über der Basis in Schwebe zu halten;
wobei bei einer Veränderung der Position des Schwebekörpers der Hallsensor ein Rückkoppelungssignal erfasst, welches eine Veränderung der Intensität der magnetischen Kraft des in dem Schwebekörper angeordneten Magneten wiederspiegelt, das Rückkoppelungssignal an das Schweb-Kontrollsystem sendet und das Schwebe-Kontrollsystem die durch die elektromagnetische Spule erzeugte magnetische Kraft in Echtzeit variiert, so dass eine Rückstoßkraft des Schwebekörpers die Schwerkraft des Schwebekörpers aufwiegt und der Schwebekörper in einer optimalen Schwebeposition gehalten wird;
wobei ein kabelloses Ladesystem in der Basis angeordnet ist und das kabellose Ladesystem mit der anderen elektromagnetischen Spule verbunden ist, die nicht die mit dem Schwebe-Kontrollsystem verbundene elektromagnetische Spule ist;
wobei das kabellose Ladesystem einen kabellosen Leistungssteller, ein mit dem kabellosen Leistungssteller verbundenes erstes Leistungswandlermodul, ein mit dem kabellosen Leistungssteller verbundenes Vollbrückenwandlermodul und ein mit dem kabellosen Leistungssteller verbundenes variables Leistungsmodul umfasst;
**dadurch gekennzeichnet, dass**
das Vollbrückenwandlermodul mit dem variablen Leistungsmodul und der elektromagnetischen Spule verbunden ist;
die selbstleuchtende Schwebelampe ferner das Folgende umfasst:
ein Netzteil, wobei das Netzteil mit dem kabellosen Leistungssteller über das erste Leistungswandlermodul verbunden ist; wobei das Netzteil eine Spannung erzeugt, das erste Leistungswandlermodul die Spannung absenkt und die abgesenkte Spannung an den kabellosen Leistungssteller übermittelt und der kabellose Leistungssteller die Ausgangsleistung an das variable Leistungsmodul anpasst, nachdem der kabellose Leistungssteller die Ausgangsleistung über das variable Leistungsmodul gewandelt bzw. transformiert hat und die transformierte Leistung dann zu dem Vollbrückenwandler zugeführt hat;
eine Ladespule, die in dem Schwebekörper angeordnet ist, wobei die Ladespule mit der lichtemittierenden Vorrichtung verbunden ist und derart konfiguriert ist, dass sie die lichtemittierende Vorrichtung auflädt.

2. Die selbstleuchtende Schwebelampe gemäß Anspruch 1, wobei ein Leistungsverstärker in der Basis angeordnet ist; und
das Schwebe-Kontrollsystem mit der elektromagnetischen Spule über den Leistungsverstärker verbunden ist, um so die magnetische Kraft der elektromagnetischen Spule durch Anpassung der Ausgangsleistung des Leistungsverstärkers zu steuern.

3. Die selbstleuchtende Schwebelampe gemäß Anspruch 1, wobei ein zweites Leistungswandlermodul in der Basis angeordnet ist; und
das Netzteil mit dem Schwebe-Kontrollsystem über das zweite Leistungswandlermodul verbunden ist.

4. Die selbstleuchtende Schwebelampe gemäß Anspruch 1, wobei eine Ausgangsspannung des Netzteils 12 V beträgt.

5. Die selbstleuchtende Schwebelampe gemäß Anspruch 1, wobei die lichtemittierende Vorrichtung eine lichtemittierende Dioden-Leuchte (LED) ist,
wobei die LED-Leuchte dauernd selbstleuchtend betrieben wird.

## Revendications

1. Lampe à suspension auto-lumineuse, comprenant :
un flotteur, dans lequel un dispositif électroluminescent et un aimant sont configurés ;
une base configurée au-dessous du flotteur, deux bobines électromagnétiques et un système de commande de suspension étant configurés dans la base, et un capteur à effet Hall étant configuré entre les deux bobines électromagnétiques et étant configuré dans la base, et le capteur à effet Hall étant relié au système de commande de suspension ;
une force magnétique générée par l'une des deux bobines électromagnétiques étant équilibrée avec une pesanteur de l'aimant ; et
le système de commande de suspension étant relié à l'une des bobines électromagnétiques, et est configuré pour commander la force magnétique de la bobine électromagnétique pour suspendre le flotteur sur la base ;
lorsque le flotteur change sa position, le capteur à effet Hall détectant un signal de rétroaction qui reflète une variation d'une intensité de champ magnétique de l'aimant configuré dans le flotteur, et envoyant le signal de rétroaction au système de commande de suspension, et le système de commande de suspension faisant varier la force magnétique générée par la bobine électromagnétique en temps réel, de telle sorte qu'une force de résistance du flotteur compense une pesanteur du flotteur, et le flotteur est suspendu dans une position de suspension optimale ;
un système de charge sans fil étant configuré dans la base, et le système de charge sans fil étant relié à la bobine électromagnétique autre que la bobine électromagnétique reliée au système de commande de suspension ;
le système de charge sans fil comprenant un dispositif de commande de puissance sans fil, un premier module de conversion de puissance relié au dispositif de commande de puissance sans fil, un module de conversion à pont complet relié au dispositif de commande de puissance sans fil et un module à sortie variable relié au dispositif de commande de puissance sans fil ;
**caractérisée par le fait que** le module de conversion à pont complet est relié au module à sortie variable et à la bobine électromagnétique ;
la lampe à suspension auto-lumineuse comprenant en outre
une alimentation électrique, l'alimentation électrique est reliée au dispositif de commande de puissance sans fil par l'intermédiaire du premier module de conversion de puissance ; l'alimentation électrique délivre une tension, le premier module de conversion de puissance diminue la tension et transmet la tension diminuée au dispositif de commande de puissance sans fil, le dispositif de commande de puissance sans fil ajuste une puissance de sortie vers le module à sortie variable, après la puissance de sortie est transformée par l'intermédiaire du module à sortie variable puis la puissance transformée est fournie au module de conversion à pont complet ;
une bobine de charge configurée dans le flotteur, la bobine de charge est reliée au dispositif électroluminescent et est configurée pour charger le dispositif électroluminescent.

2. Lampe à suspension auto-lumineuse selon la revendication 1, dans laquelle un amplificateur de puissance est configuré dans la base ; et
le système de commande de suspension est relié à la bobine électromagnétique par l'intermédiaire de l'amplificateur de puissance, de façon à commander la force magnétique de la bobine électromagnétique par réglage de la puissance de sortie de l'amplificateur de puissance.

3. Lampe à suspension auto-lumineuse selon la revendication 1, dans laquelle un second module de conversion de puissance est configuré dans la base ; et
l'alimentation électrique est reliée au système de commande de suspension par l'intermédiaire du second module de conversion de puissance.

4. Lampe à suspension auto-lumineuse selon la revendication 1, dans laquelle une tension de sortie de l'alimentation électrique est de 12 V.

5. Lampe à suspension auto-lumineuse selon la revendication 1, dans laquelle le dispositif électroluminescent est une lampe à diode électroluminescente (DEL),
la lampe à DEL est alimentée pour être continuellement auto-lumineuse.
